# EUROPEAN PATENT APPLICATION

(11) **EP 1 124 098 A1**
(43) Date of publication of application: **16.08.2001**
(21) Application number: 01200487.5
(22) Date of filing: 12.02.2001
(51) Int. Cl.: F24H 8/00, F23J 13/02, F24F 7/04

(54) **Channel system, especially for high-energy boilers, method for the treatment of an existing channel system and a channel for discharging combustion gases**

(30) Priority: 11.02.2000 NL 1014358; 10.03.2000 NL 1014614
(71) Applicant: GASTEC N.V., NL-7327 AC Apeldoorn (NL)
(72) Inventor: Dijkhof, Willem, 7323 KA Apeldoorn (NL)
(74) Representative: Prins, Adrianus Willem

(57) **Abstract**

The invention relates to a channel system (1) comprising a discharge channel (2) for a combustion gas of at least one combustion system (4) and at least one connection (12) for supplying the combustion gases of the at least one combustion system to the discharge channel.

The invention also relates to a method for adapting an existing channel system comprising a discharge channel (2) for a combustion gas of at least one combustion system (4) and at least one connection (12) for supplying the combustion gases of the at least one combustion system to the discharge channel for obtaining a channel system according to the invention.

## Description

This invention relates to a channel system comprising a discharge channel for a combustion gas of at least one combustion system and at least one connection for supplying the combustion gases of the at least one combustion system to the discharge channel, a wall of the discharge channel being provided with a water-repellent agent.

This invention also relates to a method for adapting an existing channel system comprising a discharge channel for a combustion gas of at least one combustion system and at least one connection for supplying the combustion gases of the at least one combustion system to the discharge channel, wherein a wall of the discharge channel is provided with a water-repellent agent.

This invention further relates to a channel for discharging a combustion gas of a combustion system.

Such a channel system, method and channel are known from DE-A-3340109.

Channel systems comprising construction channels for discharging combustion gases are known and are used, for instance, in conventional central heating boilers. These channel systems often consist of constructional materials such as concrete, chamotte or brick. In the existing buildings, in the past, in most cases so-called shunt ducts have been used. These channel systems consist of a main channel having a secondary channel at each floor. To the secondary channels, generally, the conventional central heating boilers are, and used to be, connected. The combustion gases are discharged in a natural manner. For this purpose, it is desirable that there is a thermal draught in the channel.

Water vapor is one of the products that are formed in the combustion of natural gas. This water vapor is passed through the channel system along with the combustion gases and may condense on the inner wall of a channel system. This problem of water of condensation occurs in particular with High-Efficiency (HE) boilers.

An HE apparatus is a CH apparatus or a combi-apparatus in which heat is produced from gaseous fuel and which has an efficiency of at least 90% in terms of the calorific higher heating value. Other apparatuses in which condensation in the discharge channel is to be expected are apparatuses in which heat is produced from gaseous fuel and which fall under the temperature class of T100 maximum. The maximum service temperature with these apparatuses is 100°C. The peak temperature is 120°C. Since construction materials from which channel systems are typically built up contain very small pores which connect the inner wall with the outer wall, this can have as a consequence that such water of condensation, through the capillary action of the inner wall, flows to the outer wall of the channel system. The result of this is that the outer wall gets soaking wet. A first adverse effect of this is that problems of moisture arise in a dwelling adjacent the channel system. A second adverse effect is that the constructional materials of which the discharge channel consists are attacked by the condensation. This happens *inter alia* because the water of condensation is acid. Fresh water of condensation has a pH value of about 2.

It is known from DE-A 3340109 to line an inner wall of a chimney with heat-resistant acid-proof glass to prevent the inner wall from being fouled with soot or tar which could attack a wall of the chimney. Such a method and system, however, are relatively costly.

The object of the invention is to meet each of the disadvantages mentioned. Accordingly, the channel system is characterized in that the discharge channel is substantially built up from at least one of the following materials: concrete, chamotte or bricks, while the water-repellent agent comprises a water-repellent impregnating agent to prevent water of condensation from being transported, as a result of the capillary action of the wall of the discharge channel, from the discharge channel to an outer side of the discharge channel, the channel system further comprising air supply means for supplying outside air to the discharge channel, means for lowering the temperature of the combustion gases in the discharge channel so that, on the one hand, the water vapor pressure in the discharge channel is lowered to prevent water vapor from being transported to the outside through the wall of the discharge channel and, on the other hand, the life of the water-repellent impregnating agent is extended, while in use such an amount of cool outside air is supplied that the temperature referred to is lower than 50°C, so that the life of the water-repellent impregnating agent will be at least 10 years.

The water-repellent impregnating agent (hydrophobing agent) prevents water (of condensation) penetrating into the wall as a result of the capillary action. The adhesion effect for water has been converted into a cohesion effect. The water (of condensation) now clings to the inner wall of the channel in the form of drops. Possibly, the water (of condensation) flows down.

Hydrophobing is a process whereby the wall of the discharge channel is treated with a water-repellent impregnating agent. In hydrophobing, use is made of the capillary action of the wall, whereby the water-repellent agent is sucked into the wall of the discharge channel to subsequently adhere to the pores of the wall. In particular, the inner wall is hydrophobed. Through capillary action, the hydrophobing agent is sucked from the inner wall to the outer wall. The extent to which the hydrophobing agent penetrates the wall depends on the capillarity of the material of which the wall consists. The impregnating agent does not form a vapor inhibiting layer, so that in the direction of the outer wall of the discharge channel transport of moisture could still take place in the form of water vapor. To prevent this, the channel system further comprises the means for lowering the temperature of the combustion gas in the discharge channel, so that the water vapor pressure in the discharge channel is lowered. Through this lowering of the water vapor pressure, any transport of water in the form of water vapor from the inner wall in the direction of the outer wall of the discharge channel is prevented, and it is actually possible for transport of water vapor to take place from the outer wall to the inner wall. Thus arises the possibility of realizing in a relatively inexpensive manner a channel system consisting of a construction material with small pores, without this channel system exhibiting any penetration of any form of moisture to the outer wall. In the case where the water vapor pressure of the combustion gas in the discharge channel is yet higher than the water vapor pressure on the outer wall of the discharge channel, there will still be a transport of water vapor from the discharge channel to the outer wall. The extent to which this happens, however, will be less than in a comparable situation in which the above-described regulation towards a lower water vapor pressure would not have been carried out. Another important aim of lowering the temperature in the discharge channel is that the life of the water-repellent agent is extended as a result of the accompanying lower temperature of the combustion gas and the acid water of condensation in the discharge channel. In other words, in general, the life of hydrophobing agents increases if the temperature to which these materials are subjected decreases. Without this measure, the life of the water-repellent impregnating agent (hydrophobing agent) is, for instance, only a few weeks. After a few weeks, penetration of water of condensation will take place again. With the measure, a life of more than 15 years can be achieved.

In the event where the combustion system is not in operation, which is the case for roughly 85% of the time on average over the whole heating season, the outside air supplied moreover provides for the uptake and removal of moisture from the discharge channel.

According to the invention, in use, such an amount of cool outside air is supplied that the temperature in the discharge channel is lower than 50°C. As a result, the life of the hydrophobing agent is more than 15 years.

Since the introduction of high-efficiency boilers (HE boilers) in the early 1980s, it has not been allowed to connect these boilers directly to the conventional constructional channels. This applies in any case if the channels consist of a material which contains small pores and hence is porous and permeable. The reason for this is that combustion gases in HE boilers are cooled to such an extent that water vapor condenses in the boiler and in the discharge channel. The result is that the discharge channel gets soaking wet on the inside and that moisture penetration occurs. A possible solution, when replacing a conventional central heating boiler with an HE boiler in existing dwellings, is to line the discharge channel with a flexible plastic discharge duct or with a metal discharge duct. Another possible solution is to connect the HE boiler to a separate metal channel system. This separate channel system can be provided both interiorly and exteriorly. A disadvantage of an exterior channel system is that provisions must be made to prevent ice formation of water of condensation. In that case, the channel system must be designed to be, for instance, double-walled. Disadvantages of such exterior channel systems are *inter alia* that they are expensive and do not have a fine appearance. Disadvantages of a separate interior channel system are *inter alia* that fitting it entails much inconvenience to the residents and that it occupies space at the expense of the living space. Be that as it may, each of the above-described measures is costly. The method of the invention is therefore characterized in that the discharge channel substantially consists of concrete, chamotte or bricks, while the inner wall of the discharge channel is provided with a water-repellent impregnating agent to prevent, in use, water of condensation from being transported, as a result of the capillary action of the wall of the discharge channel, from the discharge channel to an outer side of the discharge channel; wherein the channel system is further provided with air supply means for supplying outside air to the discharge channel, means for lowering the temperature of the combustion gases in the discharge channel so that, on the one hand, the water vapor pressure in the discharge channel is lowered to prevent water vapor from being transported to the outside through the wall of the discharge channel and, on the other hand, the life of the water-repellent impregnating agent is extended, while in use such an amount of cool outside air is supplied that the temperature referred to is lower than 50°C, so that the life of the water-repellent impregnating agent will be at least 10 years.

The channel according to the invention is characterized in that a wall of the channel is provided with a water-repellent impregnating agent, to prevent, in use, water of condensation from being transported, as a result of the capillary action of the wall of the discharge channel, from the discharge channel to an outer side of the discharge channel.

EP-A-0 685 689 discloses a channel system provided with a controllable bypass which is connected in parallel with a boiler which is connected with an air supply channel and a discharge channel of the channel system for selectively lowering the pressure in the air supply channel when this pressure runs up too high. The aim is not to lower the temperature in the discharge channel. Further, the system is not suitable for use in the system of DE 3340109 because in this latter system no air supply channel is present.

DE-A-197 41 901 discloses a channel system which is manufactured from waterglass-bound granular silicate-containing material. The system is not manufactured from concrete, chamotte or bricks. An inner wall of the system is further treated with a silicone-containing hydrophobing agent. This system is not provided either with an air supply channel for the supply of air to a heating apparatus, so that the bypass system of EP-A-0 685 689 is not applicable.

The invention will be further explained with reference to the drawing. In the drawing:
Fig. 1 schematically shows a possible embodiment of the channel system according to the invention;
Fig. 2 shows a cross section of the channel system according to Fig. 1 along the line A-A;
Fig. 3 shows an alternative embodiment of a part of the channel system according to Fig. 1; and
Fig. 4 schematically shows an alternative embodiment of a channel system according to the invention.

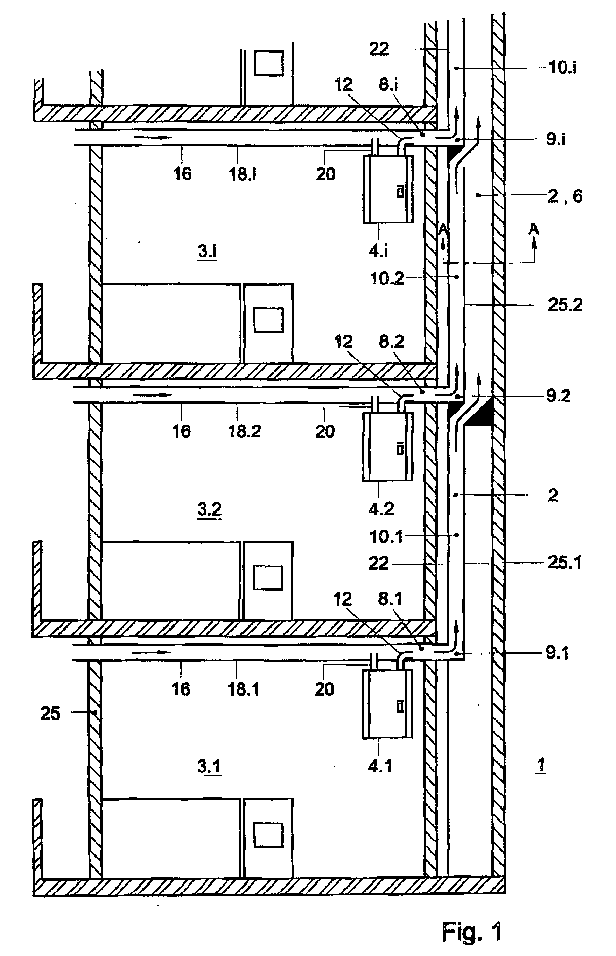

In Fig. 1 a channel system according to the invention is designated by reference numeral 1. The channel system 1 comprises a discharge channel 2 for a combustion gas of at least one combustion system 4.i (i=1,2,...,N). Each combustion system may, for instance, consist of an HE apparatus or another apparatus where condensation in the discharge channel is to be expected. An HE apparatus is a CH apparatus or a combi-apparatus in which heat is produced from gaseous fuel and which has an efficiency of at least 90% in terms of the calorific higher heating value. Other apparatuses where condensation in the discharge channel is to be expected are apparatuses in which heat is produced from gaseous fuel and which fall under the temperature class of T100 maximum. The maximum service temperature with these apparatuses is 100°C. The peak temperature is 120°C.

In this example, the discharge channel 2 is provided with a main channel 6 and a plurality of secondary channels 8.i (i=1,2,...,N) situated at different floors 3.i (i=1,2,...,N) of a dwelling and each terminating in the main channel 6. In this example, the secondary channels 8.i comprise horizontal channels 9.i (i=1,2,...,N) and vertical channels 10.i (i=1,2,...,N). The vertical channels 10.i are sometimes referred to as shunt channels and have, for instance, a length of at least two meters.

Each secondary channel is provided with a connection 12 for connection to one of the combustion systems 4.i. Via this connection 12, the combustion system 4.i feeds combustion gas to the associated secondary channel 8.i.

The discharge channel 2 in this example is substantially built up from construction materials such as concrete, chamotte or bricks. In this example, the inner wall of the discharge channel 2 has been treated with a water-repellent impregnating agent (hydrophobing agent). This process is sometimes referred to as hydrophobing. The impregnating agent, as a result of the capillary action of the wall of the discharge channel, is sucked into this channel wall and adheres to walls of pores in the channel wall. This water-repellent impregnating agent prevents water of condensation from being transported, as a result of the capillary action of the wall of the discharge channel 2, from an inner side of the discharge channel 2 to an outer side of the discharge channel. In this example, both the main channel 6 and the shunt channels 10.i have been treated with the water-repellent impregnating agent referred to.

The horizontal channels 9.i in this example have not been treated with the impregnating agent because these channels 9.i are manufactured from metal. If the horizontal channels 9.i had been manufactured from the same material as the shunt channels 10.i, the horizontal channels 9.i would also have been treated with the impregnating agent. In that case, therefore, the secondary channels would have been treated completely with the impregnating agent.

If the space so permits, it is, of course, also possible to treat an outer side of the discharge channel 2 with the impregnating agent. What matters in the final product, especially as regards the impregnating agent, is that the impregnating agent has migrated into the pores of the wall 19 of the discharge channel. Preferably, the impregnating agent has been applied at least from the inner wall of the discharge channel, penetrating the wall from the inner wall in the direction of the outer wall.

The channel system is further provided with means to lower the temperature of the combustion gas in the discharge channel, so that the vapor pressure in the discharge channel is lowered. In this example, the means for lowering the temperature comprise air supply means 16 for supplying air to the discharge channel, so that the temperature of the combustion gases downstream of the air supply means in the discharge channel 2 falls. The air supply means 16 in this example are provided with supply channels 18.i (i=1, 2, ..., N) for supplying air to each of the secondary channels 8.i. In addition, the supply channels 18.i are provided with a connection 20 for supplying air to the combustion systems 4.i which, in use, are connected to the secondary channels 8.i for delivering combustion gases.

The operation of the channel system according to Fig. 1 is as follows.

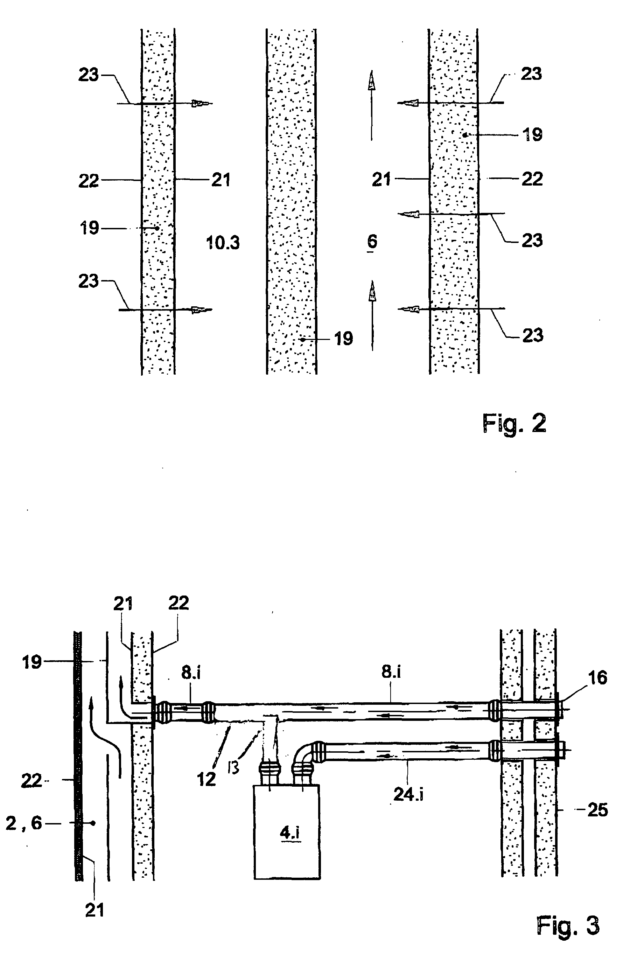

In use, the combustion systems 4.i, in this example High Efficiency (HE) boilers, will, for the purpose of combustion, draw in air via the supply channels 18.i. At the same time, the combustion means 4.i will, via the connections 12, deliver combustion gases to the secondary channels 8.i. Via connection 12, the combustion gases are blown in the direction of the secondary channel at a relatively high speed. Through the injection action, additional outside air is drawn in via the air supply channel, so that the temperature of the combustion gases decreases. As a result, the vapor pressure in the channel decreases. As a result of the relatively low temperature of the combustion gases, condensation of water can occur in the discharge channel 2. Due to the discharge channel being provided with the water-repellent impregnating agent referred to, absorption of water of condensation in the channel wall 19 of the discharge channel 2 (see Fig. 2) is prevented. This equally applies to the common partition 25.i of the shunt channel 10.i and the main channel 6. The water of condensation clings to the inner wall of the discharge channel 2 in the form of drops. When several drops have formed, the water even flows down in the discharge channel 2.

Further, via the supply channels 18.i, cool air, in this case outside air, is supplied to the discharge channel 2 and to the secondary channels 10.i. What applies in particular in this example is that the air is supplied to the discharge channel 2 adjacent the connection 12. As a result of all this, the temperature of the combustion gas in the discharge channel 2 will decrease. The water vapor pressure in the discharge channel 2 will thereby decrease. This has a number of advantages.

At combustion gas temperatures such as they occur in practice in HE boilers, the water vapor pressure in the discharge channel is higher than the water vapor pressure on the outside of the discharge channel, in particular in the dwelling. This gives rise, in the permeable hydrophobed channel wall, to transport of water vapor from an inner wall 21 in the direction of an outer wall 22 of the discharge channel (see Fig. 2). In the wall 19, with the exception of the partition 25.i, there occurs a decrease of the temperature from the inside to the outside. If at a point in the wall the maximum water vapor pressure is achieved, condensation of the water vapor will occur at that point. Proceeding from the point under consideration to the outer wall 22, further condensation occurs. Thus the outer wall 22 of the discharge channel may still become soaking wet.

Due to the feature that as a result of this mixing of the combustion gases with the outside air the temperature of the combustion gas in the discharge channel is lowered, so that the water vapor pressure is likewise lowered, the transport of water vapor from the inner wall 21 through the wall 19 in the direction of the outer wall 22 will decrease. In fact, as a result, for a large part of the time, the water vapor pressure may actually be lower than the water vapor pressure in the dwelling. As a result, at least for a large part of the time, there does not occur any transport of water vapor from the inner wall 21 of the discharge channel in the direction of the outer wall 22 of the discharge channel. Rather, transport 23 in the opposite direction will occur (see Fig. 2). The outer walls 22 of the discharge channel do not thereby get wet.

When, as indicated by arrow 23 in Fig. 2, water vapor is transported from the outer wall 22 in the direction of the inner wall 21, this is in itself no problem, since the outer wall 22 does not get soaking wet, and any water of condensation formed on the inner wall of the discharge channel 2 cannot, by virtue of the impregnating agent, be transported back to the outer wall 22.

In particular, therefore, the means for lowering the temperature of the combustion gas are arranged such that the water vapor pressure in the discharge channel is lower than the water vapor pressure outside the discharge channel.

Another essential aim of lowering the temperature of the combustion gases in the discharge channel 2 is that the hydrophobing agent will degenerate less rapidly. In the winter period, the temperature of the combustion gases of the HE boiler can run up to 100°C. At this temperature, the impregnating agent could degenerate very rapidly. To be able to guarantee a life of, for instance, at least 15 years, the temperature of the combustion gases must be kept low. This is realized by mixing the combustion gases with outside air. What applies here is that, in use, such an amount of cool outside air is supplied that the temperature in the discharge channel is lower than 50°C. The life referred to is then at least 25 years. When such an amount of outside air is supplied that the temperature in the discharge channel is lower than 40°C and 30°C, respectively, the life referred to will be 50 years and 200 years, respectively. More particularly, such an amount of outside air is supplied that the temperature of the wall of the discharge channel is lower than 50°C. Discharge channel in this connection is understood to mean in any case that portion of the discharge channel that is provided with the water-repellent impregnating agent. To that end, the supply channels are generally provided with an injector 12. However, this is not requisite. A simple T-piece for admixing cool outside air would also suffice. The mixing of the combustion gases with outside air therefore has the function not only of lowering the water vapor pressure in the discharge channel 2 but also of preventing the impregnating agent from being broken down relatively rapidly as a result of high temperatures.

Through the continuous supply of outside air, in the period when the combustion systems 4.i are not in operation, the drops of condensate and the water of condensation will be taken up into the outside air flowing past. Accumulation of water of condensation in the discharge channel 2 is thereby prevented. Roughly, the combustion means 4 are in operation for as little as 15% of the time, based on the whole heating season. During the remaining 85% of time, the water of condensation present in the discharge channel 2 is taken up into the outside air flowing past. Accumulation of water of condensation is thereby prevented.

In Fig. 3, an alternative variant is shown, which could also be used in the system according to Fig. 1. Parts corresponding to Fig. 1 are provided with the same reference numerals.

According to the variant according to Fig. 3, the air supply means 16 comprise at least supply channels 18.i for supplying air to the discharge channel 2. In this regard, the supply channels 18.i are functionally equivalent to the supply channels 18.i such as these have been discussed in relation to Fig. 1. However, the apparatus is further provided with second supply channels 24.i which are arranged separately from the supply channels 18.i. The supply channels 24.i are each arranged, in use, to be coupled with the combustion systems 4.i for the supply of combustion air to these combustion systems 4.i. Both the first supply channels 18.i and the second supply channels 24.i are in open communication with the outside air and, in this example, have accordingly been passed outside through an exterior wall 25 of a dwelling for taking in air. In particular, the supply channels 18.i can each be provided with an injector. For that matter, this also applies to the supply channels 18.i of the embodiment according to Fig. 1. These supply channels also supply air from an outer side of the dwelling and to that end extend through the exterior wall 25 of the dwelling.

The operation of the channel system according to Fig. 3 further corresponds fully to the operation of the channel system according to Fig. 1.

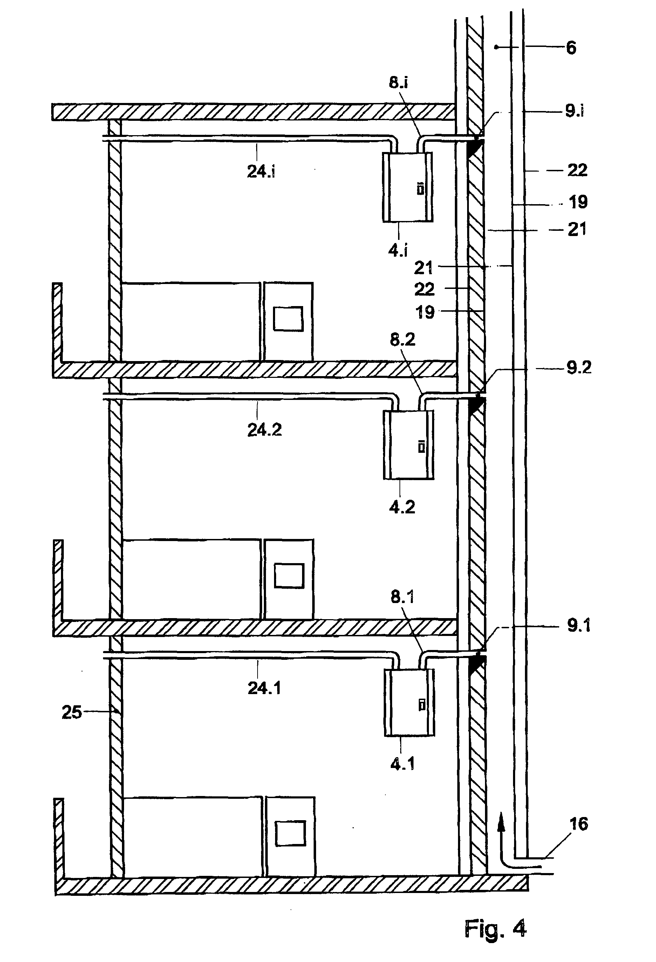

In Fig. 4, a third variant of a channel system according to the invention is shown, with parts corresponding to Figs. 1 and 3 provided with the same reference numerals. In this example, the combustion systems 4 are provided with outside air for the combustion by way of the second supply channels 24.i. The combustion gases are supplied to the main channel 6 via the secondary channels 8.i (here only comprising the horizontal channels 9.i and not the shunt channels 10.i). In this example, however, the first supply channels 18.i mentioned earlier are absent. In this example, accordingly, the temperature of the combustion gases in the discharge channel 2 is lowered in a different manner. To that end, the main channel 6 is provided with air supply means 16 for supplying air to the main channel 6. The main channel 6 is directed substantially vertically, while the air supply means 16 are arranged to supply air adjacent a lower end of the main channel.

In this example, the air supply means 16 consist of a supply pipe at the lower end of the main channel 6, through which outside air is supplied to the lower end of the main channel. This cool outside air will cause the temperature of the combustion gases in the main channel to decrease, with the result that the water vapor pressure in the main channel will be lowered. This decrease of the temperature of the combustion gases can be such that the water vapor pressure in at least parts of the discharge channel 2 is lower, or is lower during a particular period, than the water vapor pressure outside the discharge channel 2. In particular, the water vapor pressure in the discharge channel can be lower than the water vapor pressure in the dwelling shown in Fig. 4. In this example, therefore, it holds that the temperature of the combustion gas present in the secondary channels 8.i is not lowered. In itself, this does not have to be a problem, since these secondary channels can be formed by plastic or metal pipes. Only the main channel 6 may, for instance, be manufactured from the construction materials mentioned earlier, such as concrete, chamotte or bricks. In this case, therefore, only the main channel 6 is provided with the water-repellent impregnating agent mentioned.

According to the invention, existing channel systems can be simply adapted for obtaining channel systems such as discussed with reference to Figs. 1-4. In the case of the channel system according to Fig. 1, an inner wall 21 of the discharge channel is provided with the water-repellent agent, such as a water-repellent impregnating agent. This water-repellent impregnating agent will be absorbed into pores of the wall of the discharge channel 2 to obtain the system according to Fig. 1. If the secondary channels 8.i are also manufactured from construction materials such as concrete, chamotte or bricks, the inner walls of these channels will likewise be provided with the water-repellent impregnating agent mentioned.

In the apparatus according to Fig. 3, however, only the main channel 6 and the portion of the secondary channels 8.i that extends parallel to the main channel 6 (and the shunt channel 10.i) consist of the construction materials mentioned, such as concrete, chamotte or bricks. In this case, therefore, only those parts of the discharge channel are provided, on the inner wall thereof, with the impregnating agent. The portion of the secondary channel 8.i that extends horizontally in the drawing (the horizontal channels 9.i) is a separate pipe which is manufactured, for instance, from plastic or metal.

In the variant embodiment according to Fig. 4, likewise only the inner wall 21 of the main channel 6 is provided with the water-repellent impregnating agent.

In the foregoing, the discharge channel has been discussed with reference to a stacked dwelling. However, such a system can also be used with a single-family dwelling. In that case, in general, only one combustion system and optionally a secondary channel are involved. In particular, the secondary channel and the main channel 6 constitute a discharge channel 2 manufactured from the same material, so that in fact no secondary channels are involved anymore. If the space so permits, it is, of course, also possible to treat an outer side of the discharge channel 2 with the impregnating agent. What matters in the end product, primarily with regard the impregnating agent, is that the impregnating agent has migrated into the pores of the wall 19 of the discharge channel. The invention also relates to new channels which, for instance in the factory, have been provided with the water-repellent agent. These channels can then be used for assembling a channel system (main channel and/or secondary channels) as discussed hereinbefore.

Such variants are all understood to fall within the scope of the invention.

## Claims

1. A channel system comprising a discharge channel for a combustion gas of at least one combustion system and at least one connection for supplying the combustion gases of the at least one combustion system to the discharge channel, a wall of the discharge channel being provided with a water-repellent agent, characterized in that the discharge channel is substantially built up from at least one of the following materials: concrete, chamotte or bricks, while the water-repellent agent comprises a water-repellent impregnating agent to prevent water of condensation from being transported, as a result of the capillary action of the wall of the discharge channel, from the discharge channel to an outer side of the discharge channel, the channel system further comprising air supply means for supplying outside air to the discharge channel, means for lowering the temperature of the combustion gases in the discharge channel so that, on the one hand, the water vapor pressure in the discharge channel is lowered to prevent water vapor from being transported outside through the wall of the discharge channel and, on the other hand, the life of the water-repellent impregnating agent is extended, while in use such an amount of cool outside air is supplied that said temperature is lower than 50°C, so that the life of the water-repellent impregnating agent will be at least 10 years.

2. A channel system according to claim 1, characterized in that the means are arranged for lowering the water vapor pressure in at least a part of the discharge channel, such that this water vapor pressure is lower than the water vapor pressure outside the discharge channel.

3. A channel system according to claim 1 or 2, characterized in that the air supply means are arranged for supplying the air at least adjacent the connection to the discharge channel.

4. A channel system according to claim 1, 2, or 3, characterized in that the air supply means are provided with at least one supply channel for air, the supply channel being coupled with both the combustion system and the discharge channel.

5. A channel system according to claim 1, 2 or 3, characterized in that the air supply means comprise at least one first supply channel, and the channel system further comprises at least one second supply channel, the second supply channel being arranged for supply of air to the combustion system, and the first supply channel being coupled with the discharge channel for supply of air to the discharge channel.

6. A channel system according to any one of the preceding claims, characterized in that the channel system comprises a main channel and a plurality of secondary channels each terminating in the main channel and each provided with a connection of the said at least one connection for a combustion system.

7. A channel system according to claim 1 or 2, characterized in that the channel system comprises a main channel and a plurality of secondary channels each terminating in the main channel and each provided with a connection of the said at least one connection for a combustion system, while each secondary channel is provided with the air supply means for supplying air to each secondary channel.

8. A channel system according to claim 7, characterized in that the air supply means are provided with supply channels for supplying the air to each of the secondary channels and for supply of air to the combustion systems which, in use, are connected to the secondary channels.

9. A channel system according to claim 7, characterized in that the air supply means comprise at least first supply channels for air, the channel system further comprising second supply channels for air, the second supply channels each being arranged, in use, to be coupled with the combustion systems for supply of air to the combustion systems, and each secondary channel being coupled with one of the second supply channels for supply of air to the secondary channels.

10. A channel system according to claim 3, characterized in that the channel system comprises a main channel and a plurality of secondary channels each terminating in the main channel and each provided with a connection of the said at least one connection for a combustion system, the main channel being provided with air supply means for supplying air to the main channel.

11. A channel system according to claim 10, characterized in that the main channel is directed substantially vertically, the air supply means being arranged to supply air adjacent a lower end of the main channel.

12. A channel system according to any one of claims 6-11, characterized in that at least one wall of the main channel is provided with the water-repellent impregnating agent.

13. A method for adapting an existing channel system comprising a discharge channel for a combustion gas of at least one combustion system and at least one connection for supplying the combustion gases of the at least one combustion system to the discharge channel, wherein a wall of the discharge channel is provided with a water-repellent agent, characterized in that the discharge channel substantially consists of concrete, chamotte or bricks, while the inner wall of the discharge channel is provided with a water-repellent impregnating agent to prevent, in use, water of condensation from being transported, as a result of the capillary action of the wall of the discharge channel, from the discharge channel to an outer side of the discharge channel; wherein the channel system is further provided with air supply means for supplying outside air to the discharge channel, means for lowering the temperature of the combustion gases in the discharge channel so that, on the one hand, the water vapor pressure in the discharge channel is lowered to prevent water vapor from being transported outside through the wall of the discharge channel and, on the other hand, the life of the water-repellent impregnating agent is extended, while in use such an amount of cool outside air is supplied that said temperature is lower than 50°C, so that the life of the water-repellent impregnating agent will be at least 10 years.

14. A method according to claim 13, characterized in that the means are arranged for lowering the water vapor pressure in at least a part of the discharge channel, such that this water vapor pressure is lower than the water vapor pressure outside the discharge channel.

15. A method according to claim 13 or 14, characterized in that the air supply means are arranged for supplying the air adjacent the connection to the discharge channel.

16. A method according to any one of the preceding claims 13, 14 or 15, characterized in that the air supply means are provided with at least one supply channel for air, the supply channel being coupled with both the combustion system and the discharge channel.

17. A method according to claim 13, 14, or 15, characterized in that the air supply means are provided with at least one first supply channel, and the channel system further comprises at least one second supply channel, the second supply channel being arranged to be coupled with the combustion system for supply of air to the combustion system, and the first supply channel being coupled with the discharge channel for supply of air to the discharge channel.

18. A channel system according to any one of the preceding claims 13-17, characterized in that the channel system is provided with a main channel and a plurality of secondary channels each terminating in the main channel and each provided with a connection of the said at least one connection for a combustion system.

19. A method according to claim 13, 14 or 15, characterized in that the channel system comprises a main channel and a plurality of secondary channels each terminating in the main channel and each provided with a connection of the said at least one connection for a combustion system, while each secondary channel is provided with the air supply means for supplying air to each secondary channel.

20. A method according to claim 19, characterized in that the air supply means are provided with supply channels for supplying the air to each of the secondary channels and for supply of air to the combustion systems which in use are connected to the secondary channels.

21. A method according to claim 19, characterized in that the air supply means comprise at least first supply channels for air, and the channel system is further provided with second supply channels for air, the second supply channels each being arranged, in use, to be coupled with the combustion systems for supply of air to the combustion systems, and each secondary channel being coupled with one of the second supply channels for supply of air to the secondary channels.

22. A method according to claim 13, characterized in that the channel system is provided with a main channel and a plurality of secondary channels each terminating in the main channel and each provided with a connection of the said at least one connection for a combustion system, the main channel being provided with air supply means for supplying air to the main channel.

23. A method according to claim 22, characterized in that the main channel is directed substantially vertically, the air supply means being arranged to supply air adjacent a lower end of the main channel.

24. A method according to any one of claims 18-23, characterized in that at least an inner wall of the main channel is provided with the water-repellent impregnating agent.

25. A method according to any one of the preceding claims 13-24, characterized in that the discharge channel, after carrying out the method, is substantially built up from at least one of the following materials: impregnated concrete, impregnated chamotte or impregnated bricks.

26. A channel for the discharge of a combustion system, characterized in that a wall of the channel is provided with a water-repellent impregnating agent, to prevent, in use, water of condensation from being transported, as a result of the capillary action of the wall of the discharge channel, from the discharge channel to an outer side of the discharge channel.
